# EUROPÄISCHE PATENTSCHRIFT

(11) **EP 2 184 999 B1**
(45) Veröffentlichungstag und Bekanntmachung des Hinweises auf die Patenterteilung: **23.05.2012**
(21) Anmeldenummer: 08758349.8
(22) Anmeldetag: 25.04.2008
(51) Int. Cl.: A22C 15/00, A23L 3/40

(54) **TROCKNUNGSWAGEN**
DRYING CABINET
CHARIOT DE SÉCHAGE

(30) Priorität: 04.05.2007 DE 102007021366; 30.05.2007 DE 102007025288; 09.10.2007 DE 102007048481
(43) Veröffentlichungstag der Anmeldung: 19.05.2010
(73) Patentinhaber: Metz, Michael, 72622 Nürtingen (DE)
(72) Erfinder: Metz, Michael, 72622 Nürtingen (DE)
(74) Vertreter: Schneiders, Josef
(86) Internationale Anmeldenummer: PCT/EP2008/003377
(87) Internationale Veröffentlichungsnummer: WO 2008/135185

(56) Entgegenhaltungen:
- DE-A1- 4 041 070
- DE-A1-102005 040 481
- DE-C- 505 091
- DE-C1- 19 734 802
- GB-A- 509 533

## Beschreibung

Die Erfindung betrifft einen Wagen mit einem Rahmen, an dem Rahmen angeordneten Registern zur Aufnahme von Behandlungsgut sowie bodenseitig angeordneten Rädern, der insbesondere für die Trocknung und Reifung von Lebensmitteln wie Rohwurst geeignet ist. Die Erfindung betrifft ferner ein Trocknungssystem, das aus einer Trocknungskammer sowie wenigstens einem solchen Trocknungswagen besteht.

Trocknungseinrichtungen werden in zahlreichen Varianten in der industriellen Technik eingesetzt. Von besonderer Bedeutung sind sie in der Lebensmitteltechnologie bei der Herstellung von Trockenlebensmitteln und/oder teilgetrockneten Produkten. Weitere Einsatzgebiete sind die Trocknung von chemischen, pharmazeutischen, landwirtschaftlichen, textilen Produkten sowie von Holz. Beispielhaft können für den Lebensmittelsektor die Reifung von Rohwurst und Käse sowie das Trocknen und Räuchern von Fleisch und Fisch genannt werden.

Bei der Herstellung von Lebensmitteln werden an Trocknungsverfahren besonders hohe Anforderungen gestellt, was hygienische Bedingungen und Gleichmäßigkeit der Trocknung anbetrifft. Die Trocknung dient dabei zum einen der Konservierung - Trockenprodukte sind um ein vielfaches länger haltbar als Frischprodukte - wie auch der Konditionierung und Reifung von beispielsweise Fleischwaren. Im folgenden wird die Erfindung mit Bezug auf die Reifung von Rohwurst beschrieben. Sie kann aber auch für andere landwirtschaftliche Produkte genutzt werden, beispielsweise für die Trocknung von Kräutern und Obst.

In der Fleischindustrie werden Trocknungsverfahren vor allem auch zur Herstellung von hochwertigen Schinken- und Wurstwaren eingesetzt. Dabei kommt es auf einen sehr gleichmäßigen Feuchtigkeitsentzug an, der einen gewissen Grad nicht übersteigen darf. Insbesondere Rohrwürste und Schinkenprodukte bedürfen eines definierten Restwassergehaltes für eine optimale Geschmacksentfaltung. Vielfach wird die Trocknung gleichzeitig mit einer Aromatisierung durch beispielsweise eingeleiteten Rauch verbunden.

Zur Trocknung, insbesondere auch von Wurst- und Fleischwaren werden vielfach Trocknungskammern eingesetzt, in die entfeuchtete und ggf. filtrierte Frischluft eingeblasen und feuchte Prozessluft abgeführt wird. Diese Trocknungsbedingungen werden in der Regel sorgfältig kontrolliert, was Feuchtigkeitsgehalt der Frischluft/Prozessluft wie auch die Temperatur in der Trocknungskammer anbetrifft. In der Regel wird ein Teil der Prozessluft im Kreis geführt. Hierzu wird der Prozessluft der Zuluft zugemischt und durchläuft mit der Frischluft erneut das Luftaufbereitungssystem.

Die herkömmlichen Trocknungskammern haben in der Regel eine relativ inhomogene Luftströmung, die zu einer ungleichmäßigen Entfeuchtung der zu trocknenden Produkte führt. Insbesondere im Bereich der Frischluftzuführung und der Prozessluftabsaugung kommt es zu starken Strömungen mit turbulentem Verlauf. In zahlreichen anderen Bereichen der Trocknungskammern sind dagegen die Luftströmungen eher mäßig, was auch zu einem geringem Wasserübergang führt. Die Trocknung der Produkte ist deshalb sehr ungleichmäßig. Diese Inhomogenität kann dazu führen, dass zu schnell trocknende Produkte sogenannte Trockenränder ausbilden und andere Produkte am Ende des Trocknungszyklus einen noch zu hohen Wassergehalt aufweisen. In der Regel sind die Trocknungszeiten lang und mit einem hohen Energieverbrauch verbunden, da die Trocknungskapazität der Trocknungsluft nur zu einem geringen Teil ausgenutzt wird.

Aus der DE 10 2005 040 481 ist ein Trocknungssystem bekannt, bei dem die Trocknungskammer in eine Trocknungszone und ein oder mehrere separate Rückführungszonen für die Prozessluft unterteilt ist und über der Trocknungszone einen Diffusor zur Abgabe von Trocknungsluft angeordnet ist. Die Rückführungszonen sind zumindest im Bodenbereich mit der Trocknungszone verbunden. Die Prozessluft wird zum Diffusor zurückgeführt.

Zur Reifung in den Trocknungskammern wird das zu behandelnde Gut in Trocknungswagen hängend eingefahren und für die notwendige Zeit darin belassen. Derartige Trocknungswagen sind allseitig offen, fahrbar, und weisen wenigstens ein eingehängtes Hängeregister auf, an dem das zu trocknende Gut hängt. Die Trocknungswagen sind allseitig offen, so dass die klimatisierte Luft Zutritt hat und an das Trocknungsgut herantreten kann. In allen bekannten Trocknungskammern ist allerdings die Beaufschlagung des Trocknungsguts mit der Trocknungsluft notwendig ungleichmäßig. Das an den Rändern des Trocknungswagens hängende Trocknungsgut wird stärker mit Luft beaufschlagt, als das im Inneren hängende Trocknungsgut. Zudem ergeben sich die schon oben erwähnten erheblichen Strömungsunterschiede in den verschiedenen Bereichen der Trocknungskammer, beispielsweise mit einer starken Luftströmung im Bereich des Lufteinlasses und -auslasses und einer schwachen Strömung in Eckbereichen oder fernab der Frischluftzufuhr liegenden Bereichen.

Der Erfindung liegt daher die Aufgabe zugrunde, die bekannten Trocknungsverfahren und -einrichtungen so zu optimieren, dass eine schnelle und gleichmäßige Trocknung der zu trocknenden Produkte erzielt werden kann. Dies gilt nicht nur für Lebensmittel sondern für alle Arten von zu trocknenden wasserhaltigen Substraten.

Diese Aufgabe wird mit einem Wagen, insbesondere Trocknungswagen der eingangs genannten Art gelöst, der mit wenigstens einer Ventilatoreinheit mit wenigstens einem Diffusor versehen ist. Der Wagen kann einen zweiten Diffusor aufweisen, der dann an der dem ersten Diffusor gegenüberliegenden Wagenseite angeordnet ist. Auf diese Weise wird eine gleichmäßige Beaufschlagung des Trocknungsguts mit Luft erreicht.

Im Folgenden wird die Erfindung insbesondere am Beispiel eines Trocknungswagens und einer Trocknungskammer beschrieben.

In der Regel wird der erfindungsgemäße Trocknungswagen eine einzelne Ventilatorhaube mit einem dieser zugeordneten Diffusor aufweisen, welche beide an der Oberseite des Wagens angeordnet sind sowie einen zweiten Diffusor am Wagenboden, so dass die Trocknungsluft den Wagen mit dem Trocknungsgut in senkrechter Richtung durchströmen kann. Ein zweiter Diffusor ist insbesondere dann entbehrlich, wenn die in den Wagen eingebauten Register oder Böden eine gleichmäßige und gerichtete Luftströmung ermöglichen.

Alternativ dazu kann der Wagen auch seitliche Luftkanäle aufweisen, die über zweite Diffusoren mit dem Wageninneren in Verbindung stehen. Der Wagen kann in diesem Fall mit einer einzigen Ventilatorhaube versehen sein, der einen Kanal mit Luft beaufschlagt, aber auch mit zwei Ventilatorhauben, eine für jeden der Kanäle, von denen der eine die Luftzufuhr steuert, der zweite die Abluft regelt. Insbesondere weist jede der Ventilatorhauben einen ersten Diffusor auf, die die Luftströmung vergleichmäßigen.

Es versteht sich, dass die Ventilatoreinheit oder mehrere Ventilatoreinheiten auch an den Wagenseiten angeordnet sein können, die für eine horizontale Luftströmung durch das Behandlungsgut sorgen. Dies ist insbesondere bei liegend angeordnetem Behandlungsgut von Vorteil. Die Diffusoren sind in diesem Fall ebenfalls seitlich am Wagen an gegenüberliegenden Seiten angeordnet.

Ein solcher erfindungsgemäßer Trocknungswagen wird allein oder in einer Mehrzahl in eine herkömmliche Trocknungskammer geschoben und dort nicht direkt der Trocknungsluft ausgesetzt, sondern individuell über das eigene Ventilator- und Diffusorsystem mit der Trocknungsluft beaufschlagt. Die individuelle Beaufschlagung mit Trocknungsluft ermöglicht eine gleichmäßige Trocknung des Trocknungsguts in allen Bereichen der Trocknungskammer, d. h. sie schaltet den Einfluss der Kammergeometrie und Inhomogenitäten der Luftströmung weitgehend aus. Des Weiteren erlaubt die Ausstattung der Trocknungswagen mit Ventilatoreinheiten die individuelle Einstellung der Luftströmung für jeden Wagen und damit die individuelle Anpassung an das jeweils zu trocknende Gut. Mit anderen Worten, es können gleichzeitig in der Trocknungskammer Wagen mit unterschiedlichem Trocknungsgut und unterschiedlichen Behandlungsbedingungen behandelt werden. Es versteht sich, dass die entsprechend für Rauch-, Reifungs-, Klima- und andere Formen von Konditionierungskammem und -wagen gilt.

Der erfindungsgemäße Trocknungswagen besteht aus einem herkömmlichen Rahmen, beispielsweise einem Profilrahmen, vorzugsweise aus leicht zu reinigendem Edelstahl-Hohlprofilen, in den Hängeregister zur Aufnahme des Trocknungsguts eingehängt sind. Das Trocknungsgut hängt zweckmäßigerweise an den Hängeregistern. Der Wagen ist zur Erleichterung der Handhabung mit Rädern ausgestattet.

Es versteht sich, dass die Hängeregister auch als Gitterroste ausgebildet sein können, auf denen das Trocknungsgut zum liegen kommt. In diesem Fall ist eine seitliche Beaufschlagung mit der Trocknungsluft sinnvoll.

Auf seiner Oberseite weist der Wagen eine Ventilatorhaube auf, die neben dem Ventilator einen ersten Diffusor beinhaltet. Der Diffusor besteht vorzugsweise aus einem oder mehreren Lochblechen, wobei bei mehreren Lochblechen die Löcher auf Lücke stehen können oder miteinander fluchten. Bei richtiger Einstellung des Abstandes und der Strömungsgeschwindigkeit kann damit eine weitgehend laminare (turbulenzarme, gleichgerichtete und gleichmäßige) Strömung innerhalb des Trocknungswagens erzeugt werden. Die für den Feuchtigkeitsübergang notwendige Verwirbelung der Strömung erfolgt ohnehin an der Grenzfläche zum Trocknungsgut.

Es versteht sich, dass der Ventilator sowohl die Luft von unten, durch das Trocknungsgut hindurch, ansaugen kann wie auch die Luft nach unten auf das Trocknungsgut abgeben kann.

Bei bestimmtem Trocknungsgut, das aufgrund seiner Form oder seines Volumens besser liegend auf Rosten gelagert wird, kann es zweckmäßig sein, Luft seitlich durch den Trocknungswagen zu führen. In diesem Fall weist der Trocknungswagen an gegenüberliegenden Seiten Luftkanäle auf, von denen der eine über die Ventilatorhaube mit Trocknungsluft versorgt wird und der andere der Abfuhr der gebrauchten Trocknungsluft dient. Auch dieser zweite Kanal kann mit einem Ventilator, der die Abluft abzieht, ausgestattet sein. Beide Kanäle stehen über Lochbleche als zweite Diffusoren mit dem Wageninneren in Verbindung. Beide Ventilatoraufsätze oder -hauben haben, vorzugsweise ebenfalls erste Diffusoren zur Vergleichmäßigung des Luftstromes. Durch eine seitliche Anordnung von Ventilatoreinheiten kann dies ebenfalls erreicht werden. Zur optimalen Einstellung der Strömung ist es notwendig, den Luftzutritt von den Seiten her zu verhindern. Dies kann beispielsweise dadurch erfolgen, dass der Trocknungswagen allseitig mit einer Folie umwickelt wird. Zweckmäßigerweise ist dies eine spannbare Stretchfolie. Die Verwendung einer Folie hat den Vorteil, dass nach Beendigung des Trocknungsvorganges die Zahl der zu reinigenden Teile gering gehalten wird; die Folie kann einfach entsorgt werden.

Alternativ ist es natürlich möglich, den Wagen mit Wänden und/oder Türen zu versehen, die zweckmäßigerweise entfernbar sind, um eine leichte Reinigung der Teile zu ermöglichen.

Der Bodenbereich des Trocknungswagens weist ggf. einen zweiten Diffusor auf, der zweckmäßigerweise nur aus einem Lochblech besteht. Bei horizontaler Luftführung sind die Diffusoren an gegenüberliegenden Seiten des Trocknungswagens angeordnet.

Es versteht sich, dass die Ventilatoreinheiten zur Reparatur, Wartung und Reinigung abnehmbar ausgelegt sind. Gemäß einer besonderen Ausführungsform sind Wagen und Ventilatoreinheit getrennt voneinander angeordnet, dergestalt, dass die Ventilatorhaube in einer Trocknungskammer so installiert ist, dass ein mit Trocknungsgut bestückter Wagen zur Trocknung des Guts unter die Haube geschoben werden kann, um so die funktionsfähige Einheit aus Haube und Wagen herzustellen.

Die erfindungsgemäßen Wagen können zusätzlich zu der Ventilatoreinheit mit einem Heiz- und/oder Kühlregister ausgestattet sein. Dies erlaubt beispielsweise die Temperierung von Reifungsgut, das Auftauen von Kühlware, das kontrollierte Abkühlen von Lebensmitteln, beispielsweise für die Herstellung von Aufschnitt oder das Einfrieren von Lebensmitteln. In der durch die Ventilatoreinheiten mit den Diffusoren gewährleisteten laminaren (gleichgerichteten) Luftströmung findet ein sehr guter (gleichmäßiger) und schneller Wärmeübergang statt, so dass das Aufwärmen bzw. Abkühlen außerordentlich schnell von Statten geht.

In diesem Fall sind hierfür Ventilatoreinheit und Heiz- bzw. Kühlregister an gegenüberliegenden Seiten des Wagens angeordnet. Die Ventilatoreinheit saugt Luft durch den Wagen an, die zuvor in dem Heiz- bzw. Kühlregister temperiert wurde. In der Regel werden aber Kühl- und Heizregister im Raum angeordnet sein.

Die erfindungsgemäßen Wagen können weiterhin Verteilungseinrichtungen für Wasser oder Konditionierungsmittel aufweisen, beispielsweise zur Befeuchtung von Behandlungsgut, zur Beaufschlagung von Behandlungsgut mit der Rauch-, Gewürzmischungen, Reifungskulturen, Würzmitteln und/oder Antibiotika wie Natamycin. Eine solche Verteilungseinrichtung kann beispielsweise Wasser oder Konditionierungsmittel in den von der Ventilatoreinheit verteilten Luftstrom eindüsen. Auch hier können die Verteilungseinrichtungen im Raum angeordnet sein, in dem die Konditionierung vorgenommen wird, oder auch in den Kanälen für die Luftzufuhr.

Es versteht sich, dass die erfindungsgemäßen Wagen über eine programmierbare Steuereinheit verfügen können, die die individuelle Einstellung auf das zu behandelnde Gut ermöglicht. Dies betrifft insbesondere die Intensität und Dauer der Beaufschlagung des Behandlungsguts mit Luft, der Kontrolle der Luftfeuchtigkeit, die Beaufschlagung mit Konditionierungsmitteln, etc. Die Steuerung kann von bestimmten Parametern abhängig gemacht werden, beispielsweise von der Kerntemperatur und/oder dem Wassergehalt eines zu behandelnden Guts, der Temperatur oder dem Wassergehalt der Abluft oder auch von einem Temperaturgradienten innerhalb des Behandlungsguts. Die Steuerung erfolgt über im Behandlungsgut oder an geeigneten Stellen des Wagens angeordnete Sensoren.

Eine Steuerung ist beispielhaft nachstehend beschrieben:
Der Trocknungswagen weist eine laminarisierte Strömung auf. Der Luftzustand am Eintritt in den Wagen wird über eine geeignete Messeinrichtung ermittelt. Über einen Messumformer wird der absolute Wassergehalt der Luft in Gramm Wasser pro Liter oder Kilogramm Luft ermittelt. Über die Passage durch den Wagen und das zu trocknende Gut nimmt die Luft Wasser auf. Am Luftaustritt aus dem Wagen ist eine identische Messeinrichtung wie am Lufteintritt installiert. Diese misst ebenso den Luftzustand und errechnet ebenso den absoluten Wassergehalt der Luft in Gramm Wasser pro Kilogramm Luft. Durch Subtraktion des Eintritts-Wassergehaltes vom Austritts-Wassergehalt ergibt sich das delta x. Das delta x sagt aus, wie viel Wasser während der Passage durch den Wagen von der Luft aufgenommen wurde und ist ein direktes Maß für die Intensität der Trocknung. Über die Anlagen-Steuerung kann der delta x Wert über die Variation der Umluftmenge im Wagen (Löseluft) sowie des Luftzustandes und des Volumenstromes der in die Kammer eingeblasenen Luft (Transportluft) exakt geregelt werden.

Diese Regelstrategie kann als eine von mehreren Regelstrategien für den Trocknungsprozess eingesetzt werden.

Eine ähnliche, bereits bekannte Regelung ist auch nach dem gravimetrischen Prinzip möglich. Hierzu steht ein Referenzwagen auf einer Waage, die die Gewichtsabnahme des Wagens durch Wasser-Verdunstung kontinuierlich misst. Die Gewichtsabnahme pro Zeit ist ebenfalls eine Größe zur direkten Ermittlung der Trocknungsintensität und als Regelparameter hinreichend bekannt.

Die Erfindung betrifft schließlich ein Trocknungssystem, das aus einer Trocknungskammer mit einer Frischluftzuführung, in die Frischluftzuführung eingeschalteten Einrichtungen zur Konditionierung der Frischluft, einer Prozessluftableitung, ggf. Einrichtungen zur Zwangszirkulierung der Prozessluft in der Trocknungskammer sowie Überwachungs- und Steuereinrichtungen zur Kontrolle und Steuerung der Luftströme, Feuchtigkeit und Temperatur zusammen mit wenigstens einem Trocknungswagen, wie vorstehend beschrieben, besteht. Eine geeignete Trocknungskammer ist beispielsweise in der Patentanmeldung DE 10 2005 040 481 beschrieben. Im Übrigen kann eine solche Trocknungskammer eine oder mehrere Ventilatorhauben vorinstalliert enthalten, unter die die Wagen mit dem Trocknungsgut geschoben werden können. Die Hauben können auch nebeneinander in Reihe angeordnet sein, so dass sie nach Art eines Durchlauftrockners genutzt werden können. Die einzelnen Wagen können dazu unter den Hauben durchlaufen. Es versteht sich ferner, dass ein "Trocknungswagen" im Sinne der Erfindung auch ein in einer Trocknungskammer aufgestellten Gestell mit einer Ventilatorhaube, die erfindungsgemäß betrieben werden, ist.

Zur Herstellung von geräucherten Waren kann die Trocknungskammer mit einem Raucheinlass versehen sein. Um die Feuchtigkeit zur Vermeidung von Trocknungsschäden fein zu regulieren, kann ferner ein Feuchtigkeitseinlass vorgesehen sein. Die Trocknungskammer kann schließlich auch mit Heizeinrichtungen versehen sein, um die Temperatur zu steuern. Es versteht sich, dass in dem erfindungsgemäßen Trocknungssystem die Kammer elektrische Anschlüsse zum Anschluss der Ventilatoren der Trocknungswagen aufweist und ggf. vorinstallierte Ventilatorhauben.

Die Erfindung wird durch die beiliegenden Abbildungen näher erläutert. Es zeigen:
- Figur 1: eine Prinzipskizze eines erfindungsgemäßen Trocknungswagen mit aufgesetzter Ventilatorhaube,
- Figur 2: eine Prinzipskizze eines erfindungsgemäßen Trocknungssystems,
- Figur 3: eine Prinzipskizze einer weiteren Ausführungsform eines Trocknungswagens.

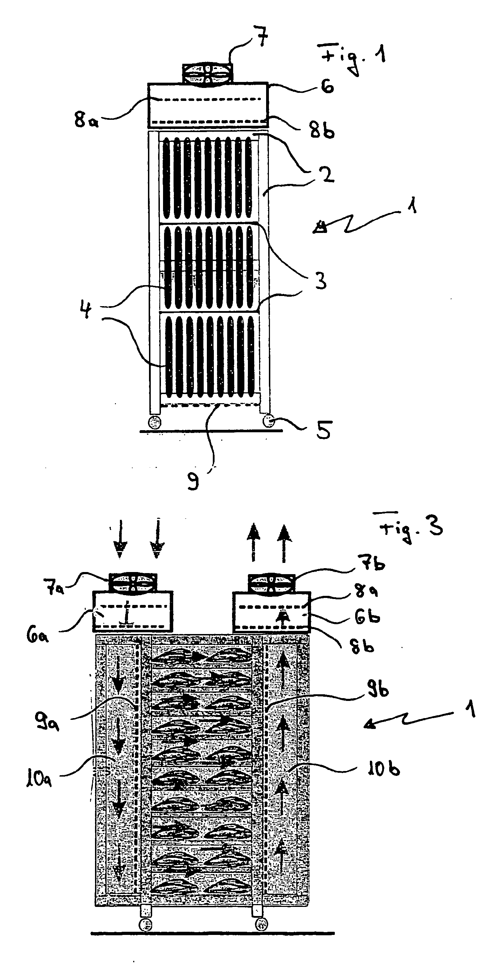

Figur 1 zeigt einen erfindungsgemäßen Trocknungswagen 1, der in einen äußeren Rahmen aus Hohlprofilen 2 eingehängte Register 3 mit eingehängten Rohwürsten 4 aufweist. Der Rahmen besteht beispielsweise aus Edelstahl-Hohlprofilen mit quadratischem Querschnitt und weist in mehreren Ebenen angeordnete Vorrichtungen zur Aufnahme der Hängeregister 3 auf. Die Hängeregister 3 besteht beispielsweise aus Gittern, in die die zu trocknende Ware eingehängt wird. Bodenseitig weist der Trocknungswagen 1 Räder 5 sowie ein Lochblech 9 auf, das als zweiter Diffusor dient.

Eine Ventilatorhaube 6 am oberen Ende des Trocknungswagens 1 hat einen aufgesetzten Ventilator 7 mit einem darunter befindlichen Strömungskasten, in dem sich zwei Lochbleche 8a und 8b im Abstand zueinander angeordnet befinden. Der gezeichneten Anordnung stehen die Löcher der Lochbleche 8a und 8b auf Lücke; eine Anordnung, in der die Löcher fluchten ist aber ebenfalls möglich.

Für den Betrieb wird der gezeigte Trocknungswagen 1 nach Beladen mit der Trocknungsware mit einer Stretchfolie umwickelt, dass der Luftzutritt von den Seiten blockiert ist. In der Trocknungsphase wird dann die Trocknungsluft über den Ventilator 7 in den Trocknungswagen gedrückt oder gesaugt, d. h. der Luftstrom erreicht das Trocknungsgut entweder über den ersten Diffusor 8 oder über den bodenseitigen zweiten Diffusor 9.

Es versteht sich, dass beispielsweise aus Sterilgründen die Ventilatorhaube 6 mit einer Filtereinheit ausgestattet werden kann. Ebenso oder zusätzlich kann bodenseitig ein solcher Filter angeordnet sein.

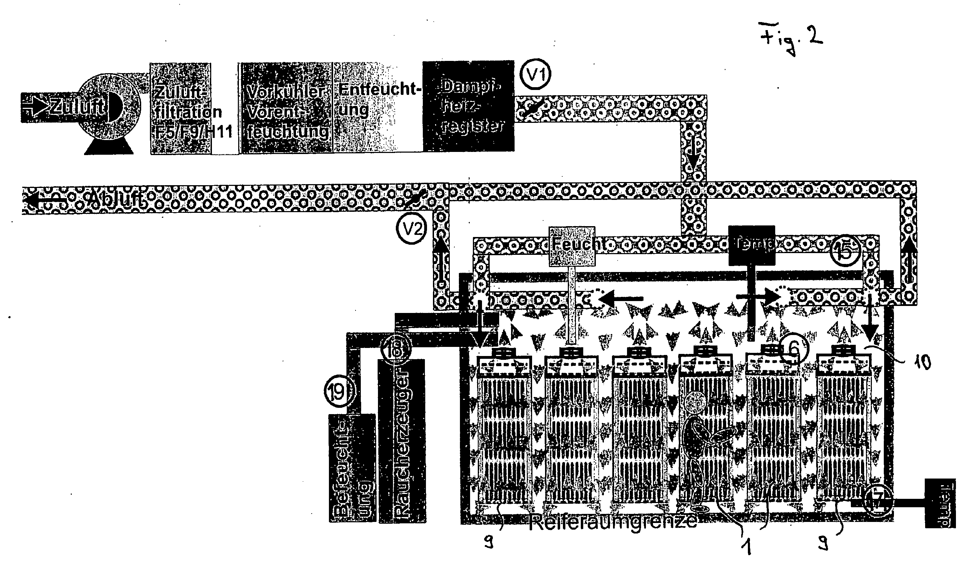

Figur 2 zeigt schematisch ein erfindungsgemäßes Trocknungssystem mit einer Trocknungskammer 10 und darin angeordneten Trocknungswagen 1.

Die Trocknungskammer 10, auch als Reiferaum zu bezeichnen, erhält ihre Frischluft über die Zuluftstrecke und einen Ventilator in filtriertem Zustand über einen Vorkühler, einen Entfeuchter und über ein Dampfheizregister. Ein Ventil V1 regelt den Zustrom. Die frische Trocknungsluft wird in den oberen Bereich der Reifekammer über Einblasdüsen 15 eingeblasen und gelangt damit in den Bereich der Trocknungswagen 1. Die Trocknungswagen 1 saugen die Trocknungsluft durch den zweiten Diffusor 9 an der Bodenseite der Trocknungswagen an. Die Trocknungsluft strömt an der Trocknungsware vorbei zur Ventilatorhaube 6 und wird dort an die Reifekammer abgegeben. Verbrauchte Luft wird über die Abluftleitung und das Ventil V2 abgezogen und ggf. der Zuluft zugemischt.

Die Feuchtigkeit und Temperatur in der Reifekammer wird über Feuchtigkeits-und Temperaturmessfühler gemessen und bei der Konditionierung der Zuluft eingestellt. Eine Heizeinrichtung 17 hilft bei der Temperaturregelung in der Kammer, insbesondere im kühleren unteren Bereich. Bei Bedarf kann der Kammer Feuchtigkeit über die Zuleitung 19 und der Rauch über die Zuleitung 18 zugesetzt werden.

Figur 3 zeigt eine weitere Variante des erfindungsgemäßen Trocknungswagens, bei dem der Wagen 1 seitlich mit Trocknungsluft beaufschlagt wird. Die Trocknungsluft wird mittels eines Ventilators 7a durch die Ventilatorhaube 6a und darin angeordnete Lochbleche in einen Verteilungskanal 10a geführt, der seinerseits über einen zweiten Diffusor 9a mit dem Trocknungsgut im Wagen 1 in Verbindung steht. Die Trocknungsluft durchströmt den Wagen und tritt durch einen weiteren zweiten Diffusor 9b in den Abluftkanal 10b ein, um über die Ventilatorhaube 6b durch eine erste Diffusoreinrichtung und den Ventilator 7b abgeführt zu werden. Die Pfeile geben die Strömungsrichtung an.

Die seitliche Zuführung der Trocknungsluft durch auf gegenüberliegenden Seiten angeordnete Luftkanäle kann für liegend gelagerte Fleischwaren, wie Schinken, aber auch für anderes liegend gelagertes Trocknungsgut sinnvoll sein.

Alternativ kann die horizontale Luftströmung aber auch durch eine seitlich am Wagen angeordnete Ventilatoreinrichtung mit Diffusoren erzeugt werden.

Der Trocknungswagen gemäß dieser Variante kann an den beiden verbleibenden Seiten mittels Türen verschlossen werden, aber auch auf die oben beschriebene Art und Weise mit einer Folie umwickelt und abgedichtet werden.

## Patentansprüche

1. Wagen, insbesondere für die Trocknung und Reifung von Rohwurst, mit einem Rahmen (2), an dem Rahmen (2) angeordneten Registern (3) zur Aufnahme von zu behandelndem Trocknungsgut (4) sowie bodenseitig angeordneten Rädern (5), **gekennzeichnet durch** wenigstens eine Ventilatoreinheit (6) mit wenigstens einem Diffusor (8, 9).

2. Wagen nach Anspruch 1, **dadurch gekennzeichnete, dass** der oder jeder Diffusor aus einem oder mehreren Lochblechen (8, 9) besteht.

3. Wagen nach Anspruch 2, **dadurch gekennzeichnet, dass** der oder jeder Diffusor aus zwei zueinander beabstandeten Lochblechen (8a, 8b) besteht, deren Öffnungen auf Lücke stehen.

4. Wagen nach einem der vorstehenden Ansprüche, **gekennzeichnet durch** einen ersten Diffusor (8) sowie wenigstens einen an der dem ersten Diffusor gegenüberliegenden Wagenseite angeordneten zweiten Diffusor (9).

5. Wagen nach einem der vorstehenden Ansprüche, **dadurch gekennzeichnet, dass** der Rahmen (2) ein Hohlprofilrahmen ist.

6. Wagen nach einem der vorstehenden Ansprüche, **gekennzeichnet durch** eine Ventilatorhaube (6) und einen am Wagenboden angeordneten zweiten Diffusor (9).

7. Wagen nach einem der vorstehenden Ansprüche, **gekennzeichnet durch** an gegenüberliegenden Seiten des Wagens (1) angeordneten Luftkanäle (10a, 10b), die über zweite Diffusoren (9a, 9b) Luft an das Trocknungsgut abgeben und davon abführen.

8. Wagen nach Anspruch 7, **dadurch gekennzeichnet, dass** jeder Kanäle (10a, 10b) mit einer Ventilatorhaube (6a, 6b) ausgestattet ist.

9. Wagen nach einem der vorstehenden Ansprüche, **gekennzeichnet durch** ein zusätzliches Heiz- und/oder Kühlregister.

10. Wagen nach Anspruch 9, **dadurch gekennzeichnet, dass** die Ventilatoreinheit (6) an der dem Heiz- und/oder Kühlregister gegenüberliegenden Wagenseite angeordnet ist.

11. Wagen nach einem der vorstehenden Ansprüche, **gekennzeichnet durch** eine Verteilungseinrichtung für Wasser und/oder Konditionierungsmittel.

12. Wagen nach einem der vorstehenden Ansprüche, **dadurch gekennzeichnet, dass** er allseitig offen ausgebildet ist.

13. Verwendung des Wagens nach einem der Ansprüche 1 bis 12 zusammen mit einer Kunststofffolie, die um den Wagen gewickelt wird, zum Behandeln von Trocknungsgut (4).

14. Verwendung des Wagens nach einem der Ansprüche 1 bis 12 in einem Trocknungssystem, bestehend aus einer Trocknungskammer (10) mit einer Frischluftzuführung, in die Frischluftzuführung eingeschalteten Einrichtungen zur Konditionierung der Frischluft, einer Prozessluftableitung, ggf. Einrichtungen zur Zwangszirkulierung der Prozessluft in der Trocknungskammer sowie Überwachungs- und Steuereinrichtungen zur Kontrolle und Steuerung der Luftströme, Feuchtigkeit und Temperatur sowie wenigstens einem Trocknungswagen (1) nach einem der Ansprüche 1 bis 12.

15. Verwendung nach Anspruch 14, **dadurch gekennzeichnet, dass** in der Trocknungskammer (10) eine oder mehrere Ventilatorhauben (6) für die Trocknungswagen vorinstalliert sind.

## Claims

1. Carriage, more particularly for drying and curing of raw sausage, said carriage being comprised of a frame (2), racks (3) arranged at said frame (2) to receive product to be dried and treated (4) as well as wheels (5) arranged at the base, **characterized by** at least one fan unit (6) with at least one diffuser (8, 9).

2. Carriage according to claim 1, **characterized in that** the diffuser or each diffuser is comprised of one or several perforated plates (8, 9).

3. Carriage according to claim 2, **characterized in that** the diffuser or each diffuser is comprised of two perforated plates (8a, 8b) distanced from each other and the apertures of which are spaced at a gap.

4. Carriage according to any of the preceding claims, **characterized by** a first diffuser (8) as well as at least a second diffuser (9) arranged at the carriage side lying opposite to the first diffuser.

5. Carriage according to any of the preceding claims, **characterized in that** said frame (2) is a hollow profile frame.

6. Carriage according to any of the preceding claims, **characterized by** a fan hood (6) and a second diffuser (9) arranged at the carriage base.

7. Carriage according to any of the preceding claims, **characterized by** air channels (10a, 10b) arranged at sides of the carriage (1) lying opposite to each other, said air channels dissipating air via second diffusers (9a, 9b) to the product to be dried and discharge air from it.

8. Carriage according to claim 7, **characterized in that** each of said channels (10a, 10b) is equipped with a fan hood (6a, 6b).

9. Carriage according to any of the preceding claims, **characterized by** an additional heating and/or cooling register.

10. Carriage according to claim 9, **characterized in that** the fan unit (6) is arranged at the carriage side lying opposite to the heating and/or cooling register.

11. Carriage according to any of the preceding claims, **characterized by** a distribution facility for water and/or conditioning agents.

12. Carriage according to any of the preceding claims, **characterized in that** it is configured as a structure being open at all sides.

13. Use of the carriage according to any of the preceding claims 1 to 12 in combination with a plastic foil wrapped around said carriage for treatment of product to be dried (4).

14. Use of the carriage according to any of the preceding claims 1 to 12 in a drying system, comprised of a drying cabinet (10) with a fresh air feeder, facilities integrated into the fresh air feeder for conditioning of fresh air, a process air discharge, facilities, if any, for forcible circulation of process air in the drying cabinet as well as monitoring and controlling facilities to control and regulate the air streams, moisture, and temperature as well as comprised of at least one drying carriage (1) according to any of the claims 1 to 12.

15. Use according to claim 14, **characterized in that** one or several fan hoods (6) for the drying carriages are pre-installed in the drying cabinet (10).

## Revendications

1. Chariot, en particulier pour le séchage et l'affinage de saucisses, avec un châssis (**2**), des registres (**3**) placés sur le châssis (**2**) pour recevoir le produit de séchage (**4**) à traiter, ainsi que des roues (**5**) placées au niveau du fond, **caractérisé par** au moins une unité de ventilateur (**6**) avec au moins un diffuseur (**8, 9**).

2. Chariot selon la revendication 1, **caractérisé en ce que** le ou chaque diffuseur est constitué d'une ou plusieurs tôles perforées (**8, 9**).

3. Chariot selon la revendication 2, **caractérisé en ce que** le ou chaque diffuseur est composé de deux tôles perforées (**8a, 8b**) espacées l'une de l'autre, dont les ouvertures sont décalées.

4. Chariot selon l'une des revendications précédentes, **caractérisé par** un premier diffuseur (**8**) ainsi qu'au moins un deuxième diffuseur (**9**) placé d'un côté du chariot opposé au premier diffuseur.

5. Chariot selon l'une des revendications précédentes, **caractérisé en ce que** le châssis (**2**) est un châssis en profilés creux.

6. Chariot selon l'une des revendications précédentes, **caractérisé par** une hotte à ventilateur (**6**) et un deuxième diffuseur (**9**) placé sur le fond du chariot.

7. Chariot selon l'une des revendications précédentes, **caractérisé par** des canaux d'air (**10a, 10b**) placés sur des côtés opposés du chariot (**1**) qui, par l'intermédiaire de deuxièmes diffuseurs (**9a, 9b**), délivrent de l'air au produit de séchage et en extraient.

8. Chariot selon la revendication 7, **caractérisé en ce que** chaque canal (**10a, 10b**) est équipé d'une hotte à ventilateur (**6a, 6b**).

9. Chariot selon l'une des revendications précédentes, **caractérisé par** un registre chauffant et/ou réfrigérant supplémentaire.

10. Chariot selon la revendication 9, **caractérisé en ce que** l'unité de ventilateur (**6**) est placée du côté du chariot opposé au registre chauffant et/ou réfrigérant.

11. Chariot selon l'une des revendications précédentes, **caractérisé par** un dispositif de distribution d'eau et/ou d'un agent de conditionnement.

12. Chariot selon l'une des revendications précédentes, **caractérisé en ce qu'**il est ouvert de toutes parts.

13. Utilisation d' un chariot selon l'une des revendications 1 à 12 avec une feuille de matière plastique entourée autour du chariot pour traiter un produit à sécher (**4**).

14. Utilisation du chariot selon l'une des revendications 1 à 12 dans un système de séchage, composé d'une chambre de séchage (**10**) avec une alimentation en air frais, des dispositifs incorporés dans l'alimentation en air frais pour conditionner l'air frais, une évacuation d'air de traitement, éventuellement des dispositifs de circulation forcée de l'air de traitement dans la chambre de séchage, ainsi que des dispositifs de surveillance et de commande pour contrôler et piloter les écoulements d'air, l'humidité et la température, ainsi qu'au moins un chariot de séchage (**1**) selon l'une des revendications 1 à 12.

15. Utilisation selon la revendication 14, **caractérisée en ce qu'**une ou plusieurs hottes à ventilateur (**6**) sont préinstallées dans la chambre de séchage (**10**) pour les chariots de séchage.
